# EUROPÄISCHE PATENTSCHRIFT

(11) **EP 0 386 471 B1**
(45) Veröffentlichungstag und Bekanntmachung des Hinweises auf die Patenterteilung: **15.12.1993**
(21) Anmeldenummer: 90102199.8
(22) Anmeldetag: 05.02.1990
(51) Int. Cl.: C01B 13/11

(54) **Vorrichtung zur Erzeugung von Ozon**
Device for generating ozone
Dispositif d'obtention d'ozone

(30) Priorität: 07.03.1989 CH 845/89
(43) Veröffentlichungstag der Anmeldung: 12.09.1990
(73) Patentinhaber: OZONIA INTERNATIONAL, 92508 Rueil Malmaison Cédex (FR)
(72) Erfinder: Mechtersheimer, Günter, Dr., CH-5415 Nussbaumen (CH)
(74) Vertreter: Armengaud Ainé, Alain

(56) Entgegenhaltungen:
- EP-A- 0 165 424

## Beschreibung

### Technisches Gebiet

Die Erfindung bezieht sich auf eine Vorrichtung zur Erzeugung von Ozon aus Sauerstoff oder Sauerstoff enthaltendem Gas durch stille elektrische Entladung in einem von dem Gas durchströmten Entladungsraum, der im wesentlichen gebildet wird von einem äusseren Rohr aus dielektrischem Material und einer innerhalb dieses Rohres angeordneten Innenelektrode, und einer das äussere Rohr umgebenden Aussenelektrode.

Mit diesem Oberbegriff nimmt die Erfindung Bezug auf einen Stand der Technik, wie er sich beispielsweise aus der DE-OS 34 22 989 oder der CH-Patentanmeldung 3383/88-8 vom 09. September 1988 der Anmelderin ergibt.

### Technologischer Hintergrund und Stand der Technik

Die zunehmende Verwendung von Ozon für chemische und physikalische Zwecke hat dazu geführt, dass die auf Arbeiten von Siemens zurückgehende Ozonröhre in der jüngsten Vergangenheit in technischer und wirtschaftlicher Hinsicht entscheidend verbessert worden ist. So wird in der US-PS 28 11 217 vorgeschlagen, die Ozonausbeute dadurch zu erhöhen, dass bestimmte Kenngrössen des Ozonisators (Frequenz der Speisespannung, Dielektrizitätskonstante des dielektrischen Materials, Amplitude der Speisespannung, Dicke der Dielektrikumsschicht und Grösse des Entladungsspaltes) bestimmte Gesetzmässigkeiten erfüllen müssen.

In anderen Publikationen werden zum gleichen Zweck spezielle Kühlmassnahmen vorgeschlagen, um die Ozonausbeute zu erhöhen, so. z.B. neben der Flüssigkeitskühlung der Aussenelektrode die Innenkühlung der Hochspannungselektrode mit Gas oder Flüssigkeit in der DE-OS 23 57 392, oder die Zwischenkühlung des mit Ozon angereicherten Einsatzgases bei hintereinandergeschalteten Ozonisatoren in der DE-OS 24 36 914.

Stand der Technik sind heute Entladungsspaltweiten um 1mm. Eine weitere Reduktion der Spaltweite stösst an die geometrischen Toleranzen der verwendeten Metall- und Dielektrikumsrohre. Insbesondere bei grösseren Rohrlängen ist eine weitere Reduktion der Spaltweite limitiert durch die immer vorhandenen Durchbiegungen der Dielektrikums- und Metallrohre.

Zwecks Erhöhung und Vergleichmässigung der Intensitäten der Feldstärke wird in der DE-OS 34 22989 vorgeschlagen, die Innenelektrode als massiven metallischen Stab auszubilden. Wegen dessen im Vergleich zu einem Rohr kleinen Durchmesser ist die Feldstärke an seiner Oberfläche gross. Da auch der Durchmesser der als Metallrohr ausgebildeten Aussenelektrode entsprechend verringert wird und die dünnen Materialstärken eingesetzt werden, ergibt sich eine elastische Konstruktion. Der Abstand zwischen Aussen- und Innenelektrode sowie Dielektrikum kann über die gesamte Länge sehr genau eingehalten werden. Hierdurch ergeben sich eine gleichmässige Intensität der Feldstärke, gute Kühlmöglichkeiten, kompakte Bauweise und hohe Leistung.

Dieser bekannte Ozonisator ist jedoch vergleichsweise aufwendig.

In der eingangs zitierten CH-Patentanmeldung wird demgegenüber ein völlig anderer Weg aufgezeigt: Es wird auf einen homogenen Entladungsspalt gänzlich verzichtet, aber dafür Sorge getragen, dass die durch die (inhomogenen) Entladungen entstehende Wärme auf möglichst direktem Wege abgeführt wird. Dünne mit Innenelektroden versehene Glasröhrchen werden zu diesem Zweck dicht zwischen zwei gekühlte metallische Platten gepackt und eine Entladung aussen zwischen den Glasröhrchen und den metallischen Platten gezündet. Bei einigen Ausführungsformen wird zusätzlich auch eine Entladung im Innern der Glasröhrchen gezündet.

### Darstellung der Erfindung

Ausgehend vom Stand der Technik liegt der Erfindung die Aufgabe zugrunde, einen Ozonerzeuger zu schaffen, der sich durch kompakten Aufbau, hohen Wirkungsgrad und hohe Ozonkonzentration auszeichnet.

Zur Lösung dieser Aufgabe bei einem Ozonerzeuger der eingangs genannten Gattung ist erfindungsgemäss vorgesehen, dass die Rohre aus dielektrischem Material zu einem Bündel zusammengefasst und dicht gepackt in einem Gehäuse angeordnet sind, dass die Aussenelektrode durch eine Metallisierung aller Aussenflächen der Rohre und/oder durch ein die Rohre umgebendes elektrisch leitendes Material gebildet ist, dass als Innenelektrode in jedem Rohr eine metallische Elektrode mit einem gegenüber dem Rohrquerschnitt wesentlich kleineren Querschnitt angeordnet ist und dass alle Innenelektroden zumindest an einem Rohrende elektrisch miteinander verbunden sind.

Anders als bei dem Ozonerzeuger nach der eingangs genannten schweizerischen Patentanmeldung wird bei der Erfindung also nur die Entladung innerhalb der Rohre verwendet. Nach den neuesten Erkenntnissen der Anmelderin können auch auf diese Weise hohe Ozonkonzentrationen bei gutem Wirkungsgrad erzielt werden. Die gebündelten Rohre werden dicht gepackt und gemäss der ersten Alternative (aussen) mit einem gut elektrisch- und wärmeleitenden Material (z.B. leichtflüssiges Metall oder metallpulvergefülltes Giessharz). Die Aussenseite der Rohre soll dabei auf Massepotential liegen. Gemäss der anderen Alternative werden aussen metallisch beschichtete Rohre verwendet. In diesem Fall muss das Giessharz nicht unbedingt stromleitend sein. Auch ist eine Kombination von aussen metallisierten Rohren mit wärme-und stromleitendem Giessmaterial möglich. Auch ist es möglich, auf das Vergiessen zu verzichten und die (metallisch beschichteten) Rohre mit Kühlgas zu kühlen.

In Anbetracht der grösseren Stabilität und der damit verbundenen erheblich kleineren Bruchgefahr der vergleichsweise dünnen Dielektrikumsrohre ist auch direkte Wasserkühlung möglich. Das Wasser tritt quasi an die Stelle der Giessmasse. Von den Ein- und Auslassöffnungen des Gasstroms ist dabei das wasserdurchflossene Volumen z.B. durch Vergiessen abzudichten. Bei ausreichender Leitfähigkeit kann das Wasser selbst für die masseseitige Kontaktierung sorgen, ansonsten müssen die Rohre aussen metallisiert sein.

Die Erfindung ermöglicht einen modularen Aufbau von Ozonerzeugern. Jedem Modul kann eine eigene Kühleinrichtung in Form von Kühlschlangen oder kühlmitteldurchflossenen Kanälen im Bündel und/oder zwischen dem Bündel und dem das Bündel umgebendem Gehäuse zugeordnet sein. Geometrie und Abmessungen der Bündel können den jeweiligen Anforderungen angepasst werden.

### Kurze Beschreibung der Zeichnung

In der Zeichnung sind eine Reihe von Ausführungsbeispielen dargestellt, anhand derer die Erfindung näher erläutert werden soll. Dabei zeigt:
- Fig.1: einen Querschnitt durch einen Ozonerzeuger-Modul mit in Giessmasse eingegossenen Dielektrikumsrohren;
- Fig.2: einen Querschnitt durch einen Ozonerzeuger-Modul mit wassergekühlten Dielektrikumsrohren;
- Fig.3: einen Querschnitt durch den Modul gemäss Fig.2 längs deren Linie AA;
- Fig.4: eine vereinfachte perspektivische Darstellung eines aus mehreren steckbaren Modulen zusammengesetzten Ozonisators.

### Wege zur Ausführung der Erfindung

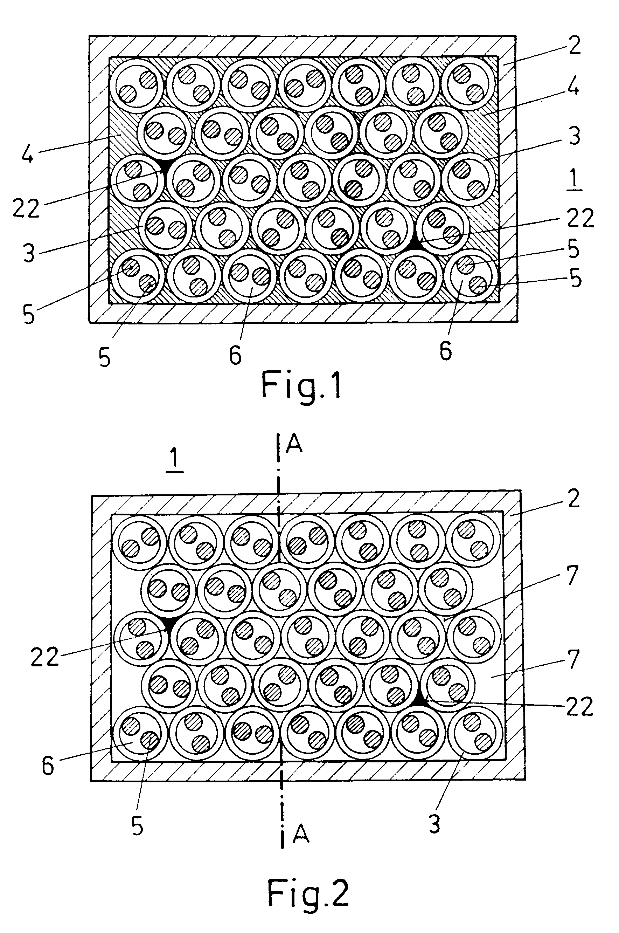

Ein Ozonerzeuger-Modul 1 nach Fig.1 umfasst ein metallisches Gehäuse 2, z.B. aus Aluminium-Profilmaterial mit Rechteckquerschnitt. In den Innenraum ist eine Vielzahl dünnwändiger Glas-, keramik oder Quarzrohre 3 dicht gepackt eingelegt. Die Zwischenräume zwischen den Rohren 3 und zwischen diesen und der metallischen Gehäusewand ist mit einem möglichst gut wärmeleitenden Material 4 ausgegossen. Als Giessmaterial kommt vor allem ein leichtflüssiges, niedrigschmelzendes Metall, z.B Zinn oder ein metallpulvergefülltes Giessharz, z.B Epoxidharz, in Frage. Auf diese Weise sind die Rohre 3 sowohl thermisch als auch elektrisch an das Gehäuse 12 angekoppelt. Das Gehäuse 2 bildet die auf Massepotential liegende Elektrode (Aussenelektrode) des Ozonerzeugers. Bei Verwendung von Metall oder elektrisch leitendem Giessmaterial kann auch auf ein Gehäuse 2, verzichtet werden. Im Inneren der Rohre 3 sind Metallstäbe oder Metalldrähte 5 eingelegt, welche die Innenelektrode(n) des Ozonerzeugers bilden. Neben in sich verdrillten Metallstäben mit flachen oder linsenförmigem Querschnitt kommen insbesondere gewellte Drähte oder Doppelwendeln aus Stahldraht in Frage. Der Querschnitt des Stabes oder der Drähte ist dabei deutlich kleiner als der Querschnitt der Rohre 3. Der Raum zwischen den Innenelektroden 5 und der Innenwandung der Rohre 3 bildet den Entladungsraum 6, durch welchen Sauerstoff oder ein Sauerstoff enthaltendes Gas geleitet wird. Durch die Verdrillung bzw. Wandelung wird der durch die Rohre fliessende Gasstrom gut verwirbelt, was die Ozonausbeute günstig beeinflusst.

Der Ozonerzeuger-Modul nach Fig.2 unterscheidet sich von dem in Fig.1 dargestellten im wesentlichen nur durch die Ankopplung der Aussenflächen der Rohre 3 an das Gehäuse 1. Hier sind die Rohre 3 aussen metallisiert, z.B. mit Aluminium beschichtet. Die stromleitende Verbindung der innenliegenden Rohre 3 erfolgt dabei über die weiter aussen liegenden Rohre. Alternativ kann die Stromzuführung über lokale Hilfskontakte 22 erfolgen. Die elektrische Ankopplung der Rohre 3 untereinander erfolgt dabei über deren metallische Beschichtung. Die Kühlung erfolgt einerseits durch Wärmeleitung an die metallische Gehäusewand oder Konvektion.

In den Zwischenräumen 7 zwischen den einzelnen Rohren 5 und zwischen diesen und der Gehäusewand kann bedarfsweise ein gasförmiges oder flüssiges Kühlmittel fliessen. Gemäss einer bevorzugten Ausführung ist das Kühlmittel Wasser, das durch Zusatz eines Salzes, z.B. NaCl, eine genügend hohe Stromleitfähigkeit aufweist, sodass es neben der Wärmeableitung auch die elektrische Ankopplung der Rohre 3 an das (metallische) Gehäuse übernehmen kann. Dann kann die Aussenmetallisierung der Rohre 3 entfallen; die Flüssigkeit wirkt als Aussenelektrode.

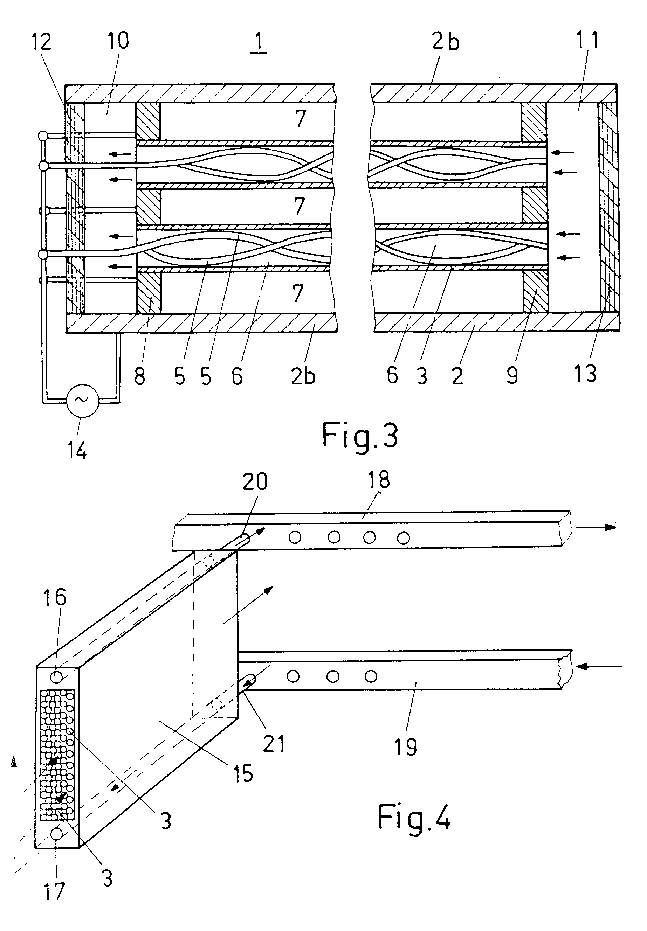

In der Schnittdarstellung der Fig.3 ist dies bei einem Ozonerzeugermodul gemäss Fig.2 beispielsweise verdeutlicht. Die Packung der Rohre 3 im Gehäuse 2 ist dabei weniger dicht, so dass Kühlwasser auch quer zur Längsachse der Rohre fliessen kann. Zu- bzw. Abfuhr der Flüssigkeit erfolgt entweder an den Schmal- oder Breitseiten des Gehäuses (nicht in Fig.3 dargestellt). Die Zufuhr des Sauerstoffs oder des sauerstoffhaltigen Gases in die Entladungsräume 6 erfolgt von den Stirnseiten des Gehäuses her. Zu diesem Zweck überragen die oberen und seitlichen Gehäusewände (nur die oberen Wände 2a, 2b sind in Fig.3 sichtbar) die Rohre 3. Diese sind in metallischen oder aus Kunststoff bestehenden Wänden 8,9 eingebettet, welche die Räume 7 von den Stirnräumen 10,11 flüssigkeitsdicht trennen. Nach aussen hin sind diese Räume durch Deckel 12,13 verschlossen. Letzteres ist dann nicht notwendig, wenn mehrere Module in einem Druckbehälter eingebaut werden und durch geeignete Massnahmen der gesamte Gasstrom durch die Module geführt wird. Die stirnseitigen Kammern 10,11 dienen als Verteilkammern für die Zu- und Abfuhr des zu behandelnden Gases. Die Innenelektroden 5 sind entweder durch den linken Deckel 12 gasdicht geführt und ausserhalb des Gehäuses untereinander verbunden, oder besser noch in der Kammer 10 miteinander elektrisch verbunden, was nur eine einzige elektrische Durchführung erforedert. Eine Wechselstromquelle 14 ist zwischen die gemeinsame Verbindung aller Innenelektroden und die Gehäusewand 2b geschaltet.

Fig.4 schliesslich zeigt eine Abwandlung eines Moduls gemäss Fig.1 und zugleich eine Möglichkeit, wie ein Ozonisator wirtschaftlich aus mehreren Modulen aufgebaut werden kann. Analog Fig.1 sind hier eine Vielzahl von dielektrischen Rohren 3 in einem Aluminium-Hohlprofil 15 dicht gepackt untergebracht und entsprechend Fig.1 mit einer gut wärme- und stromleitenden Giesmasse vergossen. In den massiven Enden des Profils 15 sind Kühlkanäle 16,17 vorgesehen, welche das gesamte Profil in Längsrichtung durchsetzen. Durch diese Kühlkanäle wird eine Kühlflüssigkeit geleitet, die über Kühlmittelsammelschienen 18,19 zu bzw. abgeleitet wird. Zu diesem Zweck sind an den hinteren Stirnseiten des Profils Anschlussarmaturen 20,21 vorgesehen, mittels derer die Kühlkanäle 16,17 an die Sammelschienen 18,19 durch Steck- oder Schraubverbindungen angeschlossen werden können.

An der anderen Stirnseite des Profils 15 sind (nicht dargestellten Deckel oder Hauben vorgesehen, die einerseits eine hydraulische Verbindung zwischen den beiden Kühlkanälen 15 und 16 herstellen und andererseits einen Sammelraum für das zu ozonisierende Gas bilden. Die elektrische Parallelschaltung aller Innenelektroden erfolgt beispielsweise am sammelschienenseitigen Ende in der Art und Weise, wie es im Zusammenhang mit Fig.3 beschrieben wurde.

## Patentansprüche

1. Vorrichtung zur Erzeugung von Ozon aus Sauerstoff oder Sauerstoff enthaltendem Gas durch stille elektrische Entladung in einem von dem Gas durchströmten Entladungsraum (6), der im wesentlichen gebildet wird aus einem äusseren Rohr (3) aus dielektrischem Material und einer innerhalb des genannten Rohres (3) angeordneten Innenelektrode (5) mit einem gegenüber dem Rohrquerschnitt wesentlich kleinerem Querschnitt und einer das äussere Rohr umgebenden Aussenelektrode (4), wobei eine Mehrzahl aus äusserem Rohr(3) und Innenelektrode (5) bestehenden Elementen in einem gemeinsamen Gehäuse (2) angeordnet sind alle Innenelektroden (4) zumindest an einem Rohrende elektrisch miteinander verbunden sind, dadurch gekennzeichnet, dass die Rohre (3) aus dielektrischem Material zu einem Bündel zusammengefasst und dicht gepackt in einem Gehäuse (2;15) angeordnet sind, dass die Aussenelektroden durch Metallisierung aller Aussenflächen der genannten Rohre (3) und/oder durch ein die genannten Rohre (3) umgebendes elektrisch leitendes Material (4) gebildet ist.

2. Vorrichtung nach Anspruch 1, dadurch gekennzeichnet, dass die dielektrischen Rohre (3) in einer gut Wärme- und stromleitenden Giessmasse (4) eingebettet sind und die elektrische Ankopplung aller Rohre (3) an ein metallisches Gehäuse (2) im wesentlichen über besagte Giessmasse (4) erfolgt.

3. Vorrichtung nach Anspruch 2, dadurch gekennzeichnet, dass die Giessmasse (4) ein niedrig schmelzendes Metall oder ein metallpulvergefüllter Kunststoff ist.

4. Vorrichtung nach Anspruch 1, dadurch gekennzeichnet, dass die Rohre (3) aus dielektrischem Material eine äussere Metallbeschichtung aufweisen und die elektrische Ankopplung an ein metallisches Gehäuse (2) über diese metallischen Beschichtungen bzw. die elektrische Ankopplung untereinander über die Beschichtung und die Stromzuführung mittels lokal die Beschichtung berührender Hilfskontakte (22) erfolgt.

5. Vorrichtung nach Anspruch 1, dadurch gekennzeichnet, dass die Rohrbündel stirnseitig mit Wänden (8,9) versehen sind und der Zwischenraum zwischen den Rohren (3) und dem Gehäuse (2) bzw. besagten Wänden mit einem Kühlmittel beaufschlagbar ist.

6. Vorrichtung nach Anspruch 5, dadurch gekennzeichnet, dass die Rohre eine äussere Metallbeschichtung aufweisen.

7. Vorrichtung nach Anspruch 5, dadurch gekennzeichnet, dass das Kühlmittel eine stromleitende Flüssigkeit ist.

8. Vorrichtung nach einem der Ansprüche 1 bis 7, dadurch gekennzeichnet, dass dies Gehäuse als Hohlprofil (15) mit einem Raum zur Aufnahme der Rohrbündel ausgebildet ist und zusätzliche Kühlkanäle (16,17) im Hohlprofil (15) vorgesehen sind.

9. Vorrichtung nach Anspruch 8, dadurch gekennzeichnet, dass die Hohlprofile (15) an einer Stirnseite mit Anschlussarmaturen (20,21) zum Anschluss an Kühlmittelsammelschienen (18,19) versehen sind.

## Claims

1. Device for generating ozone from oxygen or gas containing oxygen by silent electric discharge in a discharge space (6) through which the gas flows and which is essentially formed by an outer tube (3) of dielectric material and an internal electrode (5), arranged inside the said tuba (3) and having a significantly smaller cross-section in comparison with the tube cross-section, and an external electrode (4), surrounding the outer tube, a multiplicity of elements comprising outer tube (3) and internal electrode (5) being arranged in a common housing (2), all internal electrodes (4) being electrically connected to one another at least at one tube end, characterized in that the tubes (3) of dielectric material are combined in a cluster and arranged tightly packed in a housing (2; 15), in that the external electrodes are formed by metallization of all the outer surfaces of the said tubes (3) and/or by an electrically conductive material (4) surrounding the said tubes (3).

2. Device according to Claim 1, characterized in that the dielectric tubes (3) are embedded in a casting compound (4) of good thermal and electrical conductivity, and the electric coupling of all the tubes (3) to a metallic housing (2) takes place essentially via said casting compound (4).

3. Device according to Claim 2, characterized in that the casting compound (4) is a metal with a low melting point or a metal powder-filled plastic.

4. Device according to Claim 1, characterized in that the tubes (3) of dielectric material have an external metal coating and the electric coupling to a metal housing (2) takes place via the said metallic coatings and the electric coupling among one another takes place via the coating and the current feeding takes place by means of auxiliary contacts (22) locally contacting the coating.

5. Device according to Claim 1, characterized in that the tube clusters are provided at the ends with walls (8, 9) and a coolant can be admitted to the intermediate space between the tubes (3) and the housing (2) or the said walls.

6. Device according to Claim 5, characterized in that the tubes have an external metal coating.

7. Device according to Claim 5, characterized in that the coolant is an electrically conductive liquid.

8. Device according to one of Claims 1 to 7, characterized in that this [sic] housing is designed as a hollow section (15) with a space for receiving the tube clusters and additional cooling channels (16, 17) are provided in the hollow section (15).

9. Device according to Claim 8, characterized in that the hollow sections (15) are provided at one end face with connection fittings (20, 21) for connection to coolant collecting lines (18, 19).

## Revendications

1. Dispositif pour la production d'ozone à partir de l'oxygène ou d'un gaz contenant de l'oxygène, au moyen d'une effluve électrique dans une chambre de décharge (6) traversée par le gaz et qui est formée essentiellement d'un tube extérieur (3) en matériau diélectrique et d'une électrode interne (5) disposée à l'intérieur dudit tube (3), ayant une section transversale nettement inférieure à la section transversale du tube, et d'une électrode externe (4) entourant le tube extérieur, dans lequel est disposée une multitude d'éléments composés d'un tube extérieur (3) et d'électrodes internes (5) dans un boîtier (2) commun, toutes les électrodes internes (4) étant reliées électriquement les unes aux autres au moins à une extrémité du tube, caractérisé en ce que les tubes (3) en matériau diélectrique sont assemblés en un faisceau et rangés de façon compacte dans un boîtier (2; 15), en ce que les électrodes externes sont constituées par métallisation de toutes les surfaces extérieures desdits tubes (3) et/ou par un matériau (4) conducteur électrique entourant lesdits tubes (3).

2. Dispositif selon la revendication 1, caractérisé en ce que les tubes en matériau diélectrique (3) sont noyés dans une masse de coulage (4) à bonne conduction électrique et thermique et en ce que le couplage électrique de tous les tubes (3) avec un boîtier métallique (2) se fait essentiellement au moyen de ladite masse de coulage (4).

3. Dispositif selon la revendication 2, caractérisé en ce que la masse de coulage (4) est un métal ayant un point de fusion bas ou une matière plastique remplie de poudre métallique.

4. Dispositif selon la revendication 1, caractérisé en ce que les tubes (3) en matériau diélectrique présentent un revêtement métallique et que le couplage électrique avec un boîtier métallique (2) intervient à l'aide de ces revêtements métalliques ou que le couplage électrique les uns aux autres intervient à l'aide du revêtement et que l'introduction de courant se fait à l'aide de contacteurs intermédiaires (22) touchant localement le revêtement.

5. Dispositif selon la revendication 1, caractérisé en ce que les faisceaux de tubes sont munis, sur la partie frontale, de parois (8, 9) et que l'intervalle entre les tubes (3) et le boîtier (2) ou éventuellement lesdites parois peut être alimenté avec un produit réfrigérant.

6. Dispositif selon la revendication 5, caractérisé en ce que les tubes présentent un revêtement métallique.

7. Dispositif selon la revendication 5, caractérisé en ce que le produit réfrigérant est un liquide conducteur électrique.

8. Dispositif selon l'une quelconque des revendications 1 à 7, caractérisé en ce que ce boîtier est constitué d'un profilé creux (15) avec une chambre pour le rangement du faisceau de tubes et qu'on prévoit des canaux de refroidissement (16, 17) additionnels dans le profilé creux (15).

9. Dispositif selon la revendication 8, caractérisé en ce que les profilés creux (15) sont munis sur une paroi frontale d'éléments de raccordement (20, 21) pour le branchement des barres collectrices de produit réfrigérant (18, 19).
